(19) **Europäisches Patentamt / European Patent Office / Office européen des brevets**

(11) **EP 1 314 985 B1**

(12) **EUROPÄISCHE PATENTSCHRIFT**

(45) Veröffentlichungstag und Bekanntmachung des Hinweises auf die Patenterteilung:
**01.09.2010  Patentblatt 2010/35**

(51) Int Cl.:
*G01P 13/02* *(2006.01)*    *G01P 5/14* *(2006.01)*
*B64D 43/02* *(2006.01)*

(21) Anmeldenummer: **02025446.2**

(22) Anmeldetag: **15.11.2002**

(54) **Luftdaten-Messvorrichtung und Luftdaten-Messsystem für Fluggeräte**

Air data sensing device and air data sensing system for air vehicles

Dispositif de mesure de données aérodynamiques et système de mesure de données aérodynamiques pour des aéronefs

(84) Benannte Vertragsstaaten:
**AT BE BG CH CY CZ DE DK EE ES FI FR GB GR IE IT LI LU MC NL PT SE SK TR**

(30) Priorität: **21.11.2001  DE 10157074**

(43) Veröffentlichungstag der Anmeldung:
**28.05.2003  Patentblatt 2003/22**

(73) Patentinhaber: **EADS Deutschland GmbH**
**85521 Ottobrunn (DE)**

(72) Erfinder: **Schulze, Bernd**
**82024 Taufkirchen (DE)**

(56) Entgegenhaltungen:
**US-A- 3 079 758    US-A- 5 207 397**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft eine Luftdaten-Meßvorrichtung für Fluggeräte insbesondere zur Messung von Flugzuständen bei großen Flugzeug-Anstellwinkeln.

Die erfindungsgemäße Meßvorrichtung bzw. das erfindungsgemäße Meßsystem kann bei Fluggeräten jeder Art angewendet werden, insbesondere bei Flugzeugen und Flugkörpern.

Konventionelle Luftdatensysteme sind nur in einem begrenzten Anstellwinkelbereich funktionsfähig und am Flugzeug so angeordnet, daß lediglich der untere Anstellwinkelbereich bis ca. 30 ° erfaßt werden kann.

Es gibt im Stand der Technik insbesondere starre, z.B. an der Rumpfspitze angeordnete, allein auf Druckmessungen gestützte Luftdatensonden, die auch für große Anstellwinkel bis zu 90° vorgesehen sind. Diese erfordern jedoch einen umfangreichen und aufwendigen Kalibrieraufwand.

Aus der US 4 184 149 ist eine Einrichtung zur Erfassung von Luftgeschwindigkeit und Lage eines Flugzeugs bekannt, bei der an einem Datenausleger, der insbesondere an der Rumpfspitze des Flugzeugs angeordnet ist, mehrere in Form eines dünnen, langgestreckten Rohres ausgebildete und an ihrem rückwärtigen Ende mit einer Finne nach Art einer Windfahne versehene Meßsonden vorgesehen sind. Diese sind jeweils um die Längsachse eines sich senkrecht zu dem Datenausleger in verschiedenen Richtungen erstreckenden Schaftes drehbar gelagert und verfügen an ihrem vorderen Ende jeweils über eine mit einem Drucksensor gekoppelte Luftaustrittsöffnung. Aus den von den Drucksensoren erhaltenen Ausgangssignalen können die Luftströmungsgeschwindigkeiten und aus von mit den Schäften gekoppelten Potentiometern abgeleiteten, den Drehwinkeln der Meßsonden entsprechenden Ausgangssignalen Größen zur Bestimmung der Fluglage, wie für Anstell- und Schiebewinkel des Flugzeugs, abgeleitet werden.

Es ist daher die Aufgabe der Erfindung, eine geeignete Sonde sowie ein entsprechendes Luftdatensystem bereitzustellen, das mit möglichst geringem gerätetechnischen und funktionellen Aufwand auch eine genaue Messung von großen Anstellwinkeln und Schiebewinkeln sowie der Fluggeschwindigkeiten und der Flughöhen ermöglicht.

Diese Aufgabe wird mit den Merkmalen des Patentanspruchs 1 gelöst. Weitere Ausführungen sind in den abhängigen Ansprüchen angegeben.

Erfindungsgemäß ist eine Luftdaten-Meßvorrichtung für Fluggeräte zur Messung von Flugzuständen vorgesehen mit einer an einem Strukturteil angeordneten, zumindest an der Übergangsstelle rotations-symmetrischen Sonde, die

Die Schrift US 3 079 758 A zeigt eine Messvorrichtung mit einer an einem Flugzeug-Strukturteil (auf der Rumpfnase) angeordneten drehbar gelagerten Sonde, auf welcher sich in zwei zueinander senkrechten Ebenen Druck-Messbohrungen befinden, denen Differenzdruckaufnehmer zugeordnet sind. Die Sonde ist zur Minimierung der Anströmwinkel verschwenkbar.

durch ein Lager um seine Längsachse drehbar an dem Strukturteil gelagert und massenmäßig um dessen Längsachse ausgeglichen ist, wobei der Drehwinkel ( $\varphi_S$ ) der Sonde über einen Meß-Aufnehmer meßbar ist, wobei auf der Sonde zumindest zwei Strakes symmetrisch zur Sonden-Symmetrieebene angeordnet sind, so daß der Sonden-schiebewinkel $\beta_S$ bei jedem Anströmzustand minimiert wird, und wobei zur Erfassung von Differenzdrücken und eines Absolutdrucks an der Sonden-Oberfläche zumindest drei Druck-Meßbohrungen mit diesen zugeordneten Differenzdruck-Aufnehmern vorgesehen sind, wobei von den DruckMeßbohrungen die erste im Zentrum oder in einem radialen Abstand zum Zentrum liegt, der kleiner ist als der radiale Abstand zum Zentrum, den die zweite Druck-Meßbohrung hat und der radiale Abstand zum Zentrum der dritten Bohrung gleich oder größer ist als der radiale Abstand der zweiten Druck-Meßbohrung zum Zentrum, während eine der Druck-Meßbohrungen in der Sonden-Symmetrieebene liegt und die beiden anderen Druck-Meßbohrungen in Bezug auf die Symmetrieebene zueinander unsymmetrisch sind, um mittels Kalibrierfunktionen die Luftdaten der ungestörten Strömung zu bestimmen und die Ausrichtung der Sonde zu überprüfen.

Erfindungsgemäß wird eine um die Längsachse des Flugzeug-Radoms drehbare, symmetrische Sonde in Form einer Radomspitze, die zumindest ein, an ihrem Umfang angeordnetes Strakepaar aufweist, als Luftdatensonde verwendet. Am Flugzeug bewirkt das Strakepaar durch seine aerodynamische Beeinflussung eine Drehstellung der drehbaren Sonde. Im Schiebeflug ensteht dadurch ein Verdrehwinkel $\varphi_S$ um die Radomachse relativ zur Symmetrieebene des Flugzeugs. Mit dem Verdrehwinkel $\varphi_S$ befindet sich die Sonde in einer Stellung, bei der über entsprechende Druckbohrungen auf ihrer Oberfläche eine schiebefreie Messung ihres Anstellwinkels $\alpha_S$ erfolgen kann.

Erfindungsgemäß sind an der Oberfläche einer drehbaren Sonde, die vorzugsweise die Spitze eines Radoms bildet, zumindest drei Druckmeßbohrungen vorgesehen, mittels derer für jeden Sondenanstellwinkel $\alpha_S$ ein Differenzdruck-Verhältnis

$$R = \frac{P_2 - P_1}{P_1 - P_3}$$

ermittelt werden kann, das unabhängig von der Flughöhe und der Fluggeschwindigkeit ist. Über beispielsweise in einem Windkanal durchgeführte Kalibrierungen und die ermittelte Kalibrierfunktion $R = R(\alpha_S)$ wird die Kehrfunktion $\alpha_S = \alpha_S( R )$ in die Luftdaten-Meßvorrichtung bzw. das Luftdatensystem implementiert, so daß damit der Sondenanstellwinkel $\alpha_S$ ermittelt werden kann. Aus dem gemessenen aktuellen Verdrehwinkel der Sonde $\varphi_S$ um die Längsachse des Radoms und dem ermittelten Sondenanstellwinkel $\alpha_S$ mit Hilfe der gemessenen Differenzdrücke und der Kalibrierung ist ein Anstell- und Schiebewinkel $\alpha_F$ bzw. $\beta_F$, unter dem das Flugzeug fliegt, bestimmbar. Die Erfassung von Flughöhe und Fluggeschwindigkeit erfolgt mit Hilfe eines Absolutdruck- und Differenzdruckaufnehmers. Zur Ermittlung des aktuellen absoluten statischen Drucks der ungestörten Strömung, mit dem die Flughöhe bestimmt wird, wird der Einfluß der Flug-Geschwindigkeit mit dem jeweiligen Differenzdruck eliminiert.

Bei dem beschriebenen System handelt es sich um ein Luftdatensystem, das vorzugsweise ergänzend zu einem konventionellen System speziell zur Messung von großen Anstellwinkeln vorgesehen ist. Darüber hinaus können mit dem erfindungsgemäßen Luftdatensystem, wenn es in Kombination mit einem konventionellen Luftdatensystem betrieben wird, Sicherheitsanforderungen durch Verfügbarkeit redundanter Messungen verbessert erfüllt werden. Das System kann jedoch auch als alleiniges Druckmess-System im relevanten Anstellwinkelbereich genutzt werden.

Die Erfindung hat folgende Vorteile:

- die Anordnung der Sonde ist im Rumpfspitzenbereich oder gegebenenfalls auch an einem in die Strömung hineinragenden Strukturteil angeordnet, so daß eine ungestörte Anströmung der Sonde sowie deren Radarverträglichkeit gegeben ist, wobei die Radom-Achse bzw. die Achse des Strukturteils als Windfahnenachse verwendet werden kann, wenn die Sonde zumindest in ihrem vorderen Bereich einen rotations-symmetrischen Körper bildet;

- der Aufwand zur Erstellung und Implementierung der Kalibrierfunktionen ist wegen der aerodynamischen Ausrichtung der Sonde in der Strömung verhältnismäßig gering, da ein schiebefreies Messen des Sondenanstellwinkels vorliegt und die aerodynamische Kalibrierung des Schiebewinkeleinflusses entfällt;

- die Kalibrierung des Sonden-Anstellwinkels erfolgt durch ein Höhen- und Geschwindigkeits-unabhängiges Differenzdruckverhältnis, das auf der Basis der Messung von zumindest zwei Differenzdrücken mit zumindest drei Druck-Meßbohrungen ermittelt wird;

- eine Steigerung der Meßgenauigkeit des Anstellwinkels ist durch die Verwendung von entsprechenden Differenzdruck-Aufnehmern mit reduziertem Druckbereich für den relevanten Flugbereich und entsprechenden Bypass-Leitungen auf einfache Weise ohne Änderung des Systemkonzepts möglich;

- die Bestimmung der Flughöhe erfolgt durch Messung des Absolutdrucks an einer Messbohrung sowie eines Differenzdrucks zwischen zwei Druck-Messbohrungen an der Sonden-Oberfläche, wodurch Geschwindigkeits-Unabhängigkeit des Meßparameters, also des statischen Drucks der ungestörten Anströmung, erreicht wird.

Im folgenden wird die Erfindung an Hand der beiliegenden Figuren beschrieben, die zeigen:

- Figur 1 eine schematische Darstellung einer Ausführungsform der erfindungsgemäßen Luftdatensonde von vorne gesehen, bei der die Anordnung der Druck-Meßbohrungen nicht dargestellt ist,

- Figur 2 eine schematische Darstellung der Ausführungsform der Figur 1 in der Seitenansicht mit einem Teil des vorderen Rumpfsegments eines Flugzeugs von der Seite gesehen,

- Figur 3 eine funktionelle Darstellung einer ersten Ausführungsform des erfindungsgemäßen Luftdatensystems, wobei eine beispielhafte Anordnung von Druck-Meßbohrungen mit einem Schaltplan für die Druck-Messung dargestellt ist,

- Figur 4 eine beispielhafte Darstellung des Verlaufs einer Kalibrier-Funktion zur Bestimmung des Sonden-Anstell-winkels $\alpha_S$ in Abhängigkeit des gemessenen Differenzdruck-Verhältnisses mit den Druck-Meßbohrungen wie in der Konfiguration nach der Figur 3 angegeben,

- Figur 5 eine beispielhafte Darstellung des Verlaufs von Kalibrier-Funktionen zur Bestimmung der Druck-Beiwerte in Abhängigkeit des Sonden-Anstellwinkels $\alpha_S$ für Drücke, die mit den Druck-Meßbohrungen in der Konfiguration nach der Figur 3 gemessen werden,

- Figur 6 eine beispielhafte Darstellung des Verlaufs einer Kalibrier-Funktion zur Bestimmung der Differenzdruck-Beiwerte in Abhängigkeit des Sonden-Anstellwinkels $\alpha_S$ für Differenzdrücke, die mit den Druck-Meßbohrungen in der Konfiguration nach der Figur 3 gemessen werden,

- Figur 7 eine funktionale Darstellung der als Meßgrößen verwendeten Sondenwinkel $\alpha_S$ und $\varphi_S$ als Funktion des Anstell- und Schiebewinkels $\alpha_F$ bzw. $\beta_F$ des Flugzeugs,

- Figur 8 eine funktionelle Darstellung einer zweiten Ausführungsform des erfindungsgemäßen Luftdatensystems, wobei eine beispielhafte Anordnung von Druck-Meßbohrungen mit einem Schaltplan für die Druck-Messung dargestellt ist.

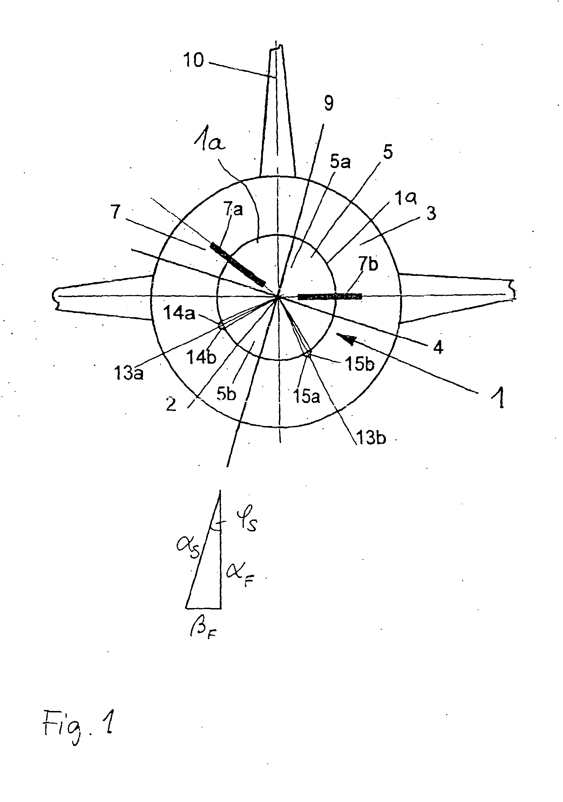

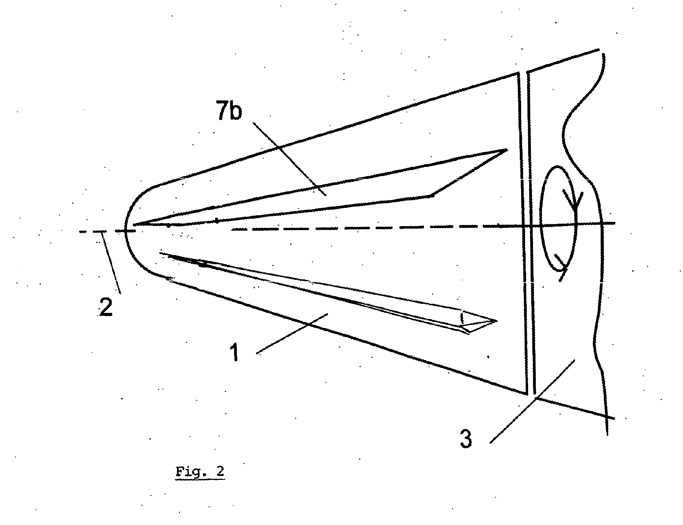

Die erfindungsgemäße Sonde 1 oder der Sonden-Träger 1a ist an einer geeigneten, d.h. aerodynamisch ungestörten Stelle der Flugzeugstruktur oder eines Strukturteils 3 vorgesehen. Das Strukturteil 3 ist zumindest an der Übergangsstelle zum Sonden-Träger 1a rotationssymmetrisch. Vorzugsweise ist das Strukturteil 3 das vordere Rumpfsegment eines Flugzeugs (Figuren 1 und 2), so dass die Sonde 1 oder der Sonden-Träger 1 a oder dessen Sonden-Oberfläche 5 in diesem Fall einen Teil der Radomspitze des Flugzeugs bildet. Die Sonde 1 ist massenmäßig ausgeglichen und durch ein Lager um ihre Längsachse 2 drehbar an dem Strukturteil 3 weitgehend reibungsfrei angeordnet. Der Massen-Ausgleich bewirkt, daß die nicht angeströmte Sonde 1 in jeder Dreh-Position im Gleichgewicht ist.

Zur weiteren Beschreibung ist in der Figur 1 eine Bezugsebene 4 angegeben, durch die eine obere Sondenhälfte 5a und eine untere Sondenhälfte 5b definiert ist. An dem Sonden-Träger 1a sind vorzugsweise eine geradzahlige Anzahl von Strakes 7 und insbesondere zwei Strakes 7a und 7b angeordnet. Grundsätzlich kann auch eine beliebige Zahl von Strakes, welche größer als zwei ist, vorgesehen sein, wobei bei der Verwendung nur eines Strakes dieser auf der Symmetrieebene 9 aufgeordnet ist. Die Strakes 7 bzw. 7a, 7b sind symmetrisch zur senkrecht zur Bezugsebene 4 verlaufenden Symmetrieebene 9 des Sonden-Träger 1a angebracht. Durch die Strakes 7a und 7b nimmt die Sonde 1 im angeströmtem Zustand eine Gleichgewichts-Position in Abhängigkeit der Anströmrichtung ein, wobei der Sonden-Anströmwinkel $\alpha_S$ in der Symmetrie-Ebene 9 liegt. In der Figur 1 ist zur Erläuterung eines angenommenen Strömungs-zustandes der Sonden-Anströmwinkel $\alpha_S$, der Anstellwinkel $\alpha_F$, der Schiebewinkel $\beta_F$ sowie die Richtung des zuge-hörigen Sonden-Drehwinkels $\varphi_S$ eingetragen. Zur weiteren Beschreibung der Erfindung wird auf eine Symmetrie-Ebene 10 des Flugzeugs Bezug genommen, gegenüber der bei einer Drehung der Sonde 1 dieselbe und damit auch deren Symmetrie-Ebene 9 verdreht wird.

Um symmetrische Umströmungsverhältnisse auch bei Beschädigung der Sonden-Oberfläche bei großen Anstellwinkeln des Flugzeugs zu gewährleisten, können vorzugsweise in der unteren Sondenhälfte 5b oder über den Umfang verteilt eine geradzahlige Anzahl von aerodynamischen Leisten oder Rippen 13 symmetrisch angeordnet sein, und zwar vorzugsweise zwei Strömungsrippen oder Leisten 13a, 13b, die symmetrisch zur Symmetrieebene 9 verlaufen. Die erste Strömungsrippe 13a weist eine erste 14a und eine zweite 14b Flanke, und die zweite Strömungsrippe 13b ebenfalls eine erste 15a und eine zweite 15b Flanke auf. Die Rippen können jedoch auch noch weitere Funktionen erfüllen, z.B. die Generierung von lokalen Strömungsverhältnissen an der Sonde 1, mit denen gewollte Druckverhältnisse an den nachstehend erläuterten Druck-Meßbohrungen bewirkt werden. Durch die Leisten wird verglichen mit einer glatten Sonden-Oberfläche eine größere Druckdifferenz erreicht, wodurch die Meßsignale größere Werte annehmen. Dadurch wird eine bessere Auflösung und erhöhte Genauigkeit der Meßwerte erreicht.

Bei einer Drehung der Sonde 1 um ihre Längsachse 2 aufgrund der an den Strakes 7 bzw. 7a, 7b wirkenden aerodynamischen Kräfte infolge eines auftretenden Flugzeug-Schiebewinkels, stellt sich ein Drehwinkel $\varphi_S$ der Sonde 1 relativ zur Flugzeug-Symmetrieebene 10 ein. Der Drehwinkel $\varphi_S$ wird mittels eines Meßaufnehmers nach dem Stand der Technik, z.B. mittels eines inkrementalen Winkelaufnehmers, gemessen. Die Strakes 7, 7a, 7b sind an der oberen Sondenhälfte 5a angeordnet. Da sich eine aerodynamisch stabile Einstellung der Sonde 1 dann ergibt, wenn sich die Strakes 7 bzw. 7a, 7b auf der Lee-Seite der Sonde 1 befinden, ist die erfindungsgemäße Sonde 1 zur Messung von positiven Anstellwinkeln vorgesehen.

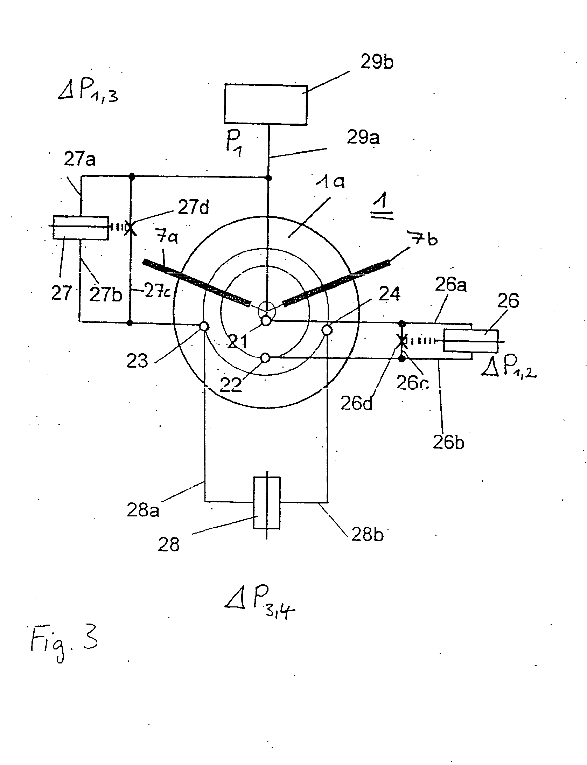

Zur Erfassung von Differenzdrücken und eines Absolutdrucks sind an der Sonden-Oberfläche 5 zumindest drei Druck-Meßbohrungen mit diesen jeweils zugeordneten Differenzdruck-Aufnehmern vorgesehen, wobei von diesen wesentlichen drei Druck-Meßbohrungen jeweils zwei bezüglich der Sonden-Symmetrieebene 9 nicht-symmetrisch und zumindest eine Druck-Meßbohrung beabstandet zur Sonden-Symmetrieebene 9 liegen dürfen. Beispielsweise können in einer ersten, in der Figur 3 dargestellten Alternative zwei Druck-Meßbohrungen auf der Symmetrie-Ebene 9 und die dritte Druck-Meßbohrung beabstandet dazu angeordnet sein. In einer weiteren Ausführungsform (nicht in den Figuren dargestellt) können zwei Druck-Meßbohrungen beabstandet und bezüglich der Symmetrie-Ebene 9 unsymmetrisch liegen und eine dritte Druck-Meßbohrung auf der Symmetrie-Ebene 9 angeordnet sein.

Durch die beschriebene erfindungsgemäße Randbedingung für die Anordnung der Druck-Meßbohrungen wird sichergestellt, daß der Differenzdruck zwischen jeweils zwei der zumindest drei Druck-Meßbohrungen nicht verschwindend gering werden kann.

Eine vierte Meßbohrung kann zusätzlich zur Kontrolle der Sondenstellung auf der Sonde 1 angeordnet sein, wobei diese vierte Meßbohrung symmetrisch zu einer beabstandet zur Symmetrie-Ebene 9 der Sonde 1 angeordneten Meßbohrung vorgesehen ist.

In der Figur 3 ist eine Konstellation von vier Meßbohrungen 21, 22, 23, 24 eingezeichnet, die in die Sonde 1 eingelassen sind. Dabei ist eine erste Meßbohrung 21 vorzugsweise exzentrisch zur Spitze der Sonde 1, eine zweite Meßbohrung 22 unterhalb derselben auf der Symmetrie-Ebene 9 sowie eine dritte 23 und eine vierte 24 Meßbohrung jeweils beabstandet zur Symmetrie-Ebene 9 angeordnet. In einer speziellen Ausführungsform kann die erste Meßbohrung 21 auch an der Spitze oder im Zentrum der Sonde 1 angeordnet sein. Die dritte 23 und vierte 24 Meßbohrung sind symmetrisch zur Symmetrie-Ebene 9 der Sonde 1 angeordnet, um die symmetrische Anströmung der Sonde 1 zu kontrollieren oder zu überwachen. Wenn diese Kontrolle nicht erforderlich ist, d.h. die erfindungsgemäße Messung der Luftdaten ohne Kontrolle ausreicht, kann auf die dritte 23 oder die vierte 24 Meßbohrung verzichtet werden.

Im folgenden wird die Funktionsweise der erfindungsgemäßen Luftdaten-Meßvorrichtung am Beispiel der Ausführungsform nach der Figur 3 beschrieben:

An der Meßbohrung 21 liegt bei einer Anströmung der Sonde 1 ein Druck $P_1$ und an der Meßbohrung 22 ein Druck $P_2$ an. Mittels eines über entsprechende Druckleitungen 26a, 26b an den Meßbohrungen 21, 22 angeschlossenen Differenzdruckwandlers 26 wird der Differenzdruck $(P_1 - P_2)$, nachfolgend und in der Figur 3 mit $\Delta P_{1,2}$ bezeichnet, ermittelt. Ebenso ist ein Differenzdruckwandler 27 über Druckleitungen 27a, 27b zwischen den Meßbohrungen 21 und 23 angeschlossen, um einen Druckdifferenz $( P_1 - P_3 )$ oder $\Delta P_{1,3}$ zu messen. Auch zwischen den Messbohrungen 23 und 24 ist über Druckleitungen 28a, 28b ein Differenzdruckwandler 28 angeschlossen, um eine Druckdifferenz $( P_3 - P_4 )$ oder $\Delta P_{3,4}$ zu messen.

Bei der Konfiguration von Druck-Meßbohrungen der Ausführungsform nach der Figur 3 können optional zusätzlich oder alternativ auch andere Differenzdruck-Messungen vorgesehen sein, z.B. zwischen den Meßbohrungen 22 und 24 oder zwischen den Meßbohrungen 21 und 23.

Die Differenzdruck-Aufnehmer 26, 27 28 können zur Steigerung der Meßgenauigkeit des Anstellwinkels und damit auch des Schiebewinkels mit einer relativ großen Empfindlichkeit vorgesehen werden. Dadurch ergibt sich ein verhältnismäßig begrenzter Druckmeßbereich, wodurch der Funktionsbereich der Luftdaten-Sonde 1 auf kleine Fluggeschwindigkeiten eingeschränkt wird. Dies entspricht dem teilweisen Einsatz des Flugzeugs bei großen Anstellwinkeln, da diese nur mit begrenzten Geschwindigkeiten geflogen werden können. Für den Hochgeschwindigkeitsbereich, in dem so große Differenzdrücke auftreten, daß die Differenzdruck-Aufnehmer 26, 27 zerstört würden, müssen die mit den Differenzdruck-Aufnehmern 26, 27 verbundenen Bohrungen 21, 22 und 21, 23 elektrisch oder pneumatisch über entsprechende Leitungen 26c, 27c mit je einem Druckventil 26d, 27d kurzgeschlossen werden.

Im Betrieb ist die Druckdifferenz zwischen symmetrisch zur Symmetrieebene 9 angeordneten Meßbohrungen, im Ausführungsbeispiel der Figur 3 die Bohrungen 23, 24, stets gleich Null, da sich die drehbare Sonde 1 mittels der Strakes 7a, 7b in die Windrichtungs-Ebene ausrichtet. Symmetrisch zur Symmetrie-Ebene 9 angeordnete Druck-Meßbohrungen sind daher nicht für die Minimal-Konfiguration zur Ermittlung der Luftdaten erforderlich, können jedoch zur Überwachung vorgesehen sein. Wenn im Flug dennoch zwischen zwei symmetrisch angeordneten Meßbohrungen ein Differenzdruck auftritt, kann dies als Indikator für einen Fehler im Meßsystem dienen. Dieser kann sich auf einen System-immanenten oder einen externen Fehler, z.B. aufgrund von Vereisung oder Verstopfung einer Meßbohrung, beziehen. Im Ausführungsbeispiel der Figur 3 können deshalb die Meßbohrungen 23 und 24 bzw. die Messung der Druckdifferenz $(P_3 - P_4)$ oder $\Delta P_{3,4}$ zur Fehlererkennung oder zur Überprüfung der Sondenstellung genutzt werden.

Über eine weitere Leitung 29a ist ein Absolutdruckwandler 29b zur Erfassung des Absolutdruckes an einer der Meßbohrungen, in der Figur 3 an der zentralen Meßbohrung 21, vorgesehen. Grundsätzlich kann der Absolutdruckwandler 29b auch an einer anderen der Meßbohrungen 22, 23, 24 angeschlossen sein.

Zusammenfassend ist festzustellen, daß erfindungsgemäß generell zumindest zwei Differenzdruck-Messungen und eine Absolutdruck-Messung erforderlich sind, um die erfindungsgemäße minimale Funktionalität zu gewährleisten. Um Sicherheits- oder Kontroll-Anforderungen zu erfüllen, können weitere Messbohrungen vorgesehen sein. Beispielsweise sind in der in der Figur 3 dargestellten Ausführungeform drei Differenzdruck-Messungen und eine Absolutdruck-Messung vorgesehen, so daß eine Differenzdruck-Messung zu Überwachungs- oder Kontroll-Zwecken verwendet werden kann.

Aufgrund der zumindest drei für Differenzdruck-Messungen vorgesehenen DruckMeßbohrungen ergeben sich immer zumindest zwei gemessene Differenzdrücke $( P_1 - P_2 )$ und $( P_1 - P_3 )$. Ein Flugzeug benötigt im Flug als Luftdaten den Anstellwinkel $\alpha_F$, den Schiebewinkel $\beta_F$, die Flughöhe und die Flug-Geschwindigkeit sowie gegebenenfalls weitere weitgehend ungestörte Luftdaten oder Anströmzustande. Zu diesem Zweck sind folgende Kehrfunktionen der Kalibrierfunktionen in diskreter oder anderer Form in der erfindungsgemäßen Luftdaten-Meßvorrichtung bzw. dem erfindungsgemäßen Luftdaten-System implementiert:

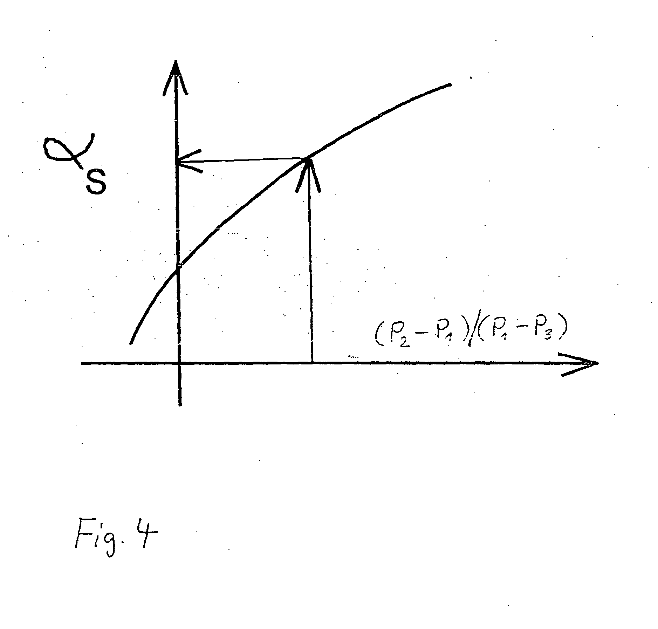

- zur Ermittlung des Sonden-Anstellwinkels $\alpha_S$ in Abhängigkeit gemessener Differenzdruck-Verhältnisse (beispielhaft in Figur 4),

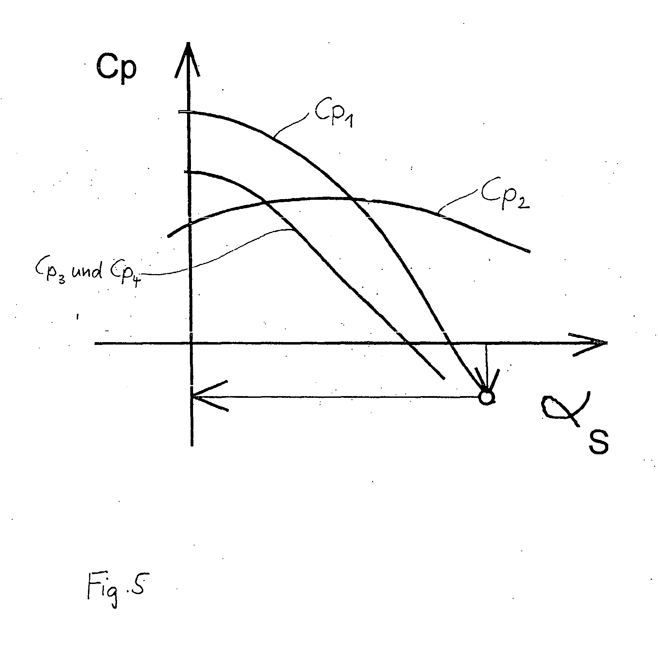

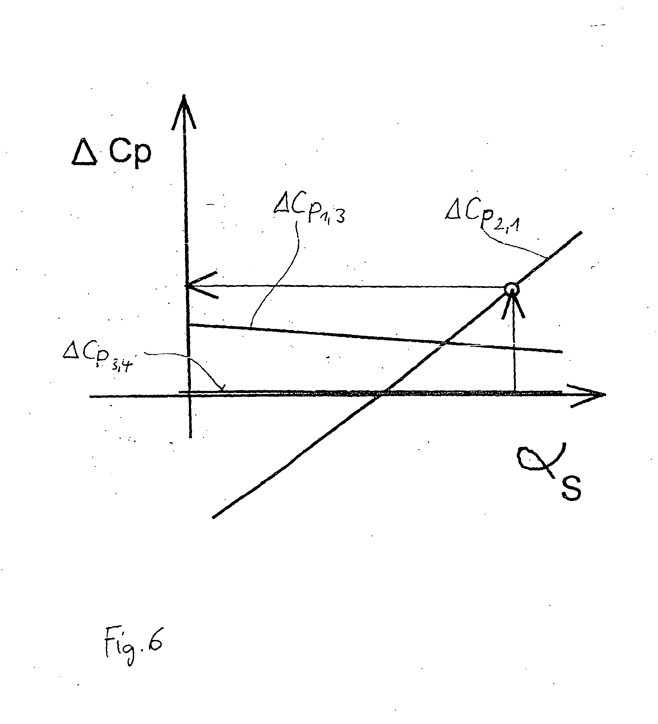

- zur Ermittlung entsprechender Beiwerte von an jeweils einer Druck-Meßbohrung anliegenden Drücken (beispielhaft in Figur 5) zur Ermittlung von Beiwerten an jeweils zwei entsprechenden Druck-Meßbohrungen anliegenden Differenzdrücken (beispielhaft in Figur 6) jeweils in Abhängigkeit vom Sonden-Anstellwinkel $\alpha_S$.

Anstelle der genannten Funktionen zur Ermittlung der Beiwerte sind auch andere äquivalente Funktionen und Zusammenhänge möglich, z.B. durch das Vorsehen mehrdimensionaler Tabellen oder Beziehungen. Generell können die Beiwerte mittels Tabellen oder Zahlenfeldern oder auf analytische Weise über funktionale Zusammenhänge oder durch Mischformen ermittelt werden. Funktionen zur Verbesserung der Beiwerte-Ermittlung können zusätzlich mit den Beiwerte-Funktionen in Verbindung stehen, z.B. Funktionen zur Stützung bei auftretenden Instabilitäten oder zur Interpolation.

Die Beiwerte-Funktionen sind bei der Ausführungsform der Sonde 1 nach der Figur 3 wie folgt definiert:

$$CP_1(\alpha_S) = (P_1 - P_\infty)/Q_\infty, \quad \beta_S = 0; \text{ analog für } CP_2(\alpha_S), CP_3(\alpha_S), CP_4(\alpha_S);$$

$$\Delta Cp_{1,2}(\alpha_S) = \Delta P_{1,2}/Q_\infty, \quad \beta_S = 0;$$

$$\Delta Cp_{1,3}(\alpha_S) = \Delta P_{1,3}/Q_\infty, \quad \beta_S = 0;$$

$$\Delta Cp_{3,4}(\alpha_S) = \Delta P_{3,4}/Q_\infty, \quad \beta_S = 0.$$

Eine beispielhafte Darstellung der Verläufe der Beiwerte $CP_1(\alpha_S)$, $CP_2(\alpha_S)$, $CP_3(\alpha_S)$, $CP_4(\alpha_S)$ in Abhängigkeit vom Sonden-Anstellwinkel $\alpha_S$ ist in der Figur 5 dargestellt. Eine beispielhafte Darstellung der Verläufe der Beiwerte $\Delta Cp_{1,2}(\alpha_S)$, $\Delta Cp_{1,3}(\alpha_S)$, $\Delta Cp_{3,4}(\alpha_S)$ in Abhängigkeit vom Sonden-Anstellwinkel $\alpha_S$ ist der Figur 6 zu entnehmen.
Wie nachfolgend beschrieben, erfolgt erfindungsgemäß

- die Bestimmung des Staudruckes bzw. der Flug-Geschwindigkeit aufgrund eines gemessenen Differenzdruck-Verhältnisses, wodurch $\alpha_S$ (Figur 4) und daraus der entsprechende Differenzdruck-Beiwert (Figur 6) ermittelt wird; über eine Formel und den entsprechenden Differenzdruck wird daraus der Staudruck bestimmt;

- die Bestimmung der Flughöhe aufgrund eines gemessenen Differenzdruck-Verhältnisses, wodurch $\alpha_S$ (Figur 4) und daraus der entsprechende Druck-Beiwert (Figur 5) ermittelt wird; über eine Formel wird aus diesem Druck-Beiwert, dem jeweiligen Staudruck und dem entsprechenden an einer Druck-Meßbohrung anliegenden absoluten Druck der herrschende statische Druck der Flughöhe bestimmt;

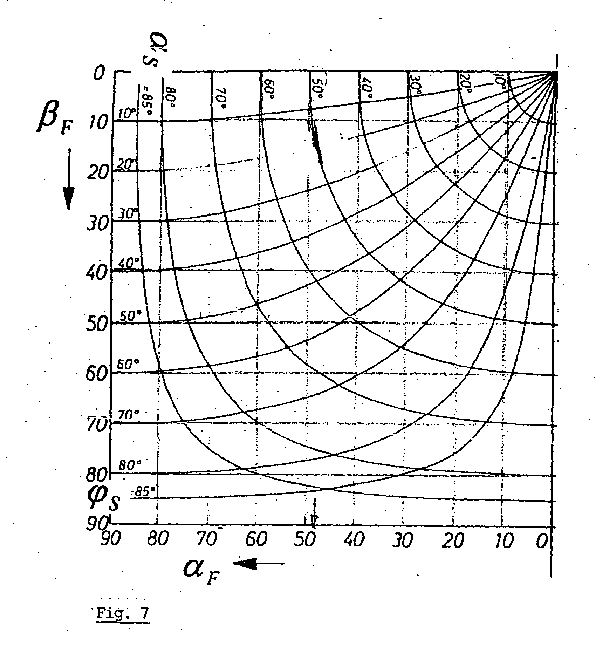

- die Bestimmung des Flugzeug-Anstellwinkels $\alpha_F$ und des Flugzeug-Schiebewinkels $\beta_F$ aufgrund eines gemessenen Differenzdruck-Verhältnisses, wodurch $\alpha_S$ (Figur 4) bestimmt wird, und aufgrund des Sonden-Drehwinkels $\varphi_S$; über trigonometrische Zusammenhänge, die graphisch beispielhaft in der Figur 7 dargestellt sind, wird aus $\alpha_S$ und $\varphi_S$ der Flugzeug-Anstellwinkel $\alpha_F$ und der Flugzeug-Schiebewinkel $\beta_F$ ermittelt;

- weitere aus den vorgenannten Luftdaten ableitbare Größen.

Die Kalibrierfunktionen werden bei der Einstellung des Systems vor dem Flug weitgehend experimentell z.B. im Windkanal oder im Flugversuch, ermittelt. Dazu werden die erfindungsgemäß vorgesehenen Druck-Meßbohrungen und die jeweils angeschlossenen Druckwandler verwendet, um die Kalibrierfunktionen des Druckbeiwerts Cp, der Differenzdruck-Beiwerte $\Delta$Cp und eines Differenzdruck-Verhältnisses R in Abhängigkeit vom Anstellwinkel der Sonde 1 in der Strömung aufzustellen. Mit diesem Meßsystem einschließlich der implementierten Kehrfunktionen der Kalibrierfunktionen und der drehbaren Sonde 1 lassen sich der Anstellwinkel $\alpha_F$, der Schiebewinkel $\beta_F$ sowie der dynamische und statische Druck des Flugzustandes bestimmen. Damit stellt das Meßsystem ein vollwertiges Luftdatensystem für ein Luftfahrzeug unter großen Anstellwinkeln dar.
Die Ermittlung des Staudrucks bzw. der Flug-Geschwindigkeit über die Meßgrössen, die Kehrfunktionen der Kalibrierfunktionen und physikalischen Formeln geschieht im einzelnen folgendermaßen:

Aufgrund eines gemessenen bzw. ermittelten Druckverhältnisses $R = \dfrac{P_2 - P_1}{P_1 - P_3}$ kann über eine entsprechende Kehrfunktion der Kalibrier-Funktion $R = R(\alpha_S)$ der Sondenanstellwinkel $\alpha_S$ (Figur 4) und daraus der entsprechende Differenzdruck-Beiwert (Figur 6) ermittelt werden. Über die physikalische Formel für den Staudruck der ungestörten Anströmung ergibt sich

$$Q_\infty = P_{1,2} / \Delta CP_{1,2} \qquad\qquad (5)$$

Mit dem gemessenen $\Delta P_{1,2} = P_1 - P_2$ und dem ermittelten $\Delta CP_{1,2}$ (Differenzen der Druckbeiwerte) wird der Staudruck bestimmt.

Die Ermittlung der Flughöhe über die Meßgrössen, Kehrfunktionen der Kalibrier-Funktionen und physikalischen Formeln geschieht im einzelnen folgendermaßen:

Aufgrund eines gemessenen Differenzdruck-Verhältnisses wird der Sondenanstellwinkel $\alpha_S$ (Figur 4) und daraus der entsprechende Druck-Beiwert (Figur 5) ermittelt. Die Ermittlung des statischen Drucks $P_\infty$ ,d.h. der statische Druck der Umgebung, erfolgt unter Verwendung des gemessenen Absolutdrucks $P_1$, des bei einem momentanen $\alpha_S$ ermittelten Staudrucks $Q_\infty$ sowie des Druckbeiwerts, z.B. von $CP_1$ ($\alpha_S$) beispielsweise gemäß der in der Figur 5 dargestellten Kalibrierfunktion. Dieser Zusammenhang lautet mathematisch:

$$P_\infty = P_1 - CP_1 (\alpha_S)^* Q_\infty \qquad\qquad (6)$$

Die Ermittlung der Flughöhe über die Meßgrössen, Kehrfunktionen der Kalibrier-Funktionen und physikalischen Formeln geschieht im einzelnen folgendermaßen:

Im Flug stellt sich die Sonde 1 mit ihren Strakes 7a, 7b stets schiebefrei zur Flugrichtung ein, wodurch die drehbare Sonde 1 einen endlichen Drehwinkel $\varphi_S$ relativ zur Flugzeug-Symmetrieebene 10 einnimmt. Der Sondenschiebewinkel $\beta_S$ wird dabei minimiert, d.h. dessen Wert ist vernachlässigbar, da sich die Sonde 1 immer symmetrisch in die Windrichtungsebene ausrichtet. Gleichzeitig entsteht eine spezifische, über die Differenzdrücke und den Absolutdruck meßbare Druckverteilung auf der Oberfläche der Sonde 1, die für die Bestimmung des Anstellwinkels der Sonde $\alpha_S$ herangezogen wird. Über die mittels der Differenzdruckwandler 26 und 27 oder 28 erfaßten Differenzdrücke wird ein Differenzdruckverhältnis R gebildet, das von der Fluggeschwindigkeit und Flughöhe unabhängig ist und unter Verwendung der Kehrfunktion $\alpha_S = \alpha_S$ (R) einer Kalibrierfunktion R ($\alpha_S$) die Bestimmung des Sondenanstellwinkels $\alpha_S$ erlaubt, wobei

$$R = \frac{p_2 - p_1}{p_1 - p_3} \qquad\qquad ( \text{s. Abb. 4} )$$

R ist eine Funktion des Differenzdruck-Verhältnisses. Das Differenzdruck-Verhältnis R ermöglicht eine Bestimmung von $\alpha_S$ unabhängig von der Höhe und vom Staudruck. Außerdem gilt folgender Zusammenhang:

$$\alpha_F = \alpha_S ( R ) \quad \text{bei} \quad \beta_F = 0 \; (\varphi_S = 0) ,$$

d.h. wenn der Schiebewinkel des Flugzeugs $\beta_F$ gleich Null ist, ist der Anstellwinkel der Sonde $\alpha_S$ gleich dem Anstellwinkel des Flugzeugs $\alpha_F$. Die Bestimmung des Anstellwinkel $\alpha_F$ und des Schiebewinkels $\beta_F$ am schiebenden Flugzeug erfolgt über trigonometrische Funktionen:

$$\alpha_F = \arctan ( \tan \alpha_S \, . \, \cos \varphi_S ) \qquad (3)$$

$$\beta_F = \arcsin ( \sin \alpha_S \, . \, \sin \varphi_S ) \qquad (4)$$

Diese Funktionen sind ebenfalls im erfindungsgemäßen Luftdatensystem in Form von Datensätzen und / oder Funktionen implementiert, um die jeweils aktuellen Luftdaten aus den Meßgrößen zu ermitteln. Der Zusammenhang zwischen dem Drehwinkel $\varphi_S$ der Sonde und dem Sondenanstellwinkel $\alpha_S$ einerseits, sowie dem Anstellwinkel $\alpha_F$ und Schiebewinkel $\beta_F$ des Flugzeugs andererseits, ist in Figur 7 graphisch dargestellt. Der entsprechende Zusammenhang ist bei dem erfindungsgemäßen Luftdatensystem in mathematischer Form abgespeichert, so dass Anstellwinkel $\alpha_F$ und Schiebewinkel $\beta_F$ mittels eines geeigneten Rechners direkt ermittelt werden können.

Die genannten Kalibrierkurven, mit deren Hilfe nach deren Invertierung aus den Meßgrößen die Luftdaten für die ungestörte Strömung abgeleitet werden, sind in Versuchen nach dem Stand der Technik zu ermitteln. Bezüglich des Drehwinkels der Sonde $\varphi_S$ erfolgt keine aerodynamische Kalibrierung, da sich dieser aus dem Ausgangssignal des hochauflösenden Inkremental-Aufnehmers ergibt. Die Drücke an der Sondenoberfläche werden im Windkanal in Form von Druck- bzw. Differenzdruckbeiwerten nur in Abhängigkeit vom Sondenanstellwinkel $\alpha_S$, jedoch nicht vom Schiebewinkel ermittelt.

Weitere Einflüsse wie insbesondere die Machzahl können über nach dem Stand der Technik bekannte Funktionen in die voranstehend beschriebenen Funktionen aufgenommen werden.

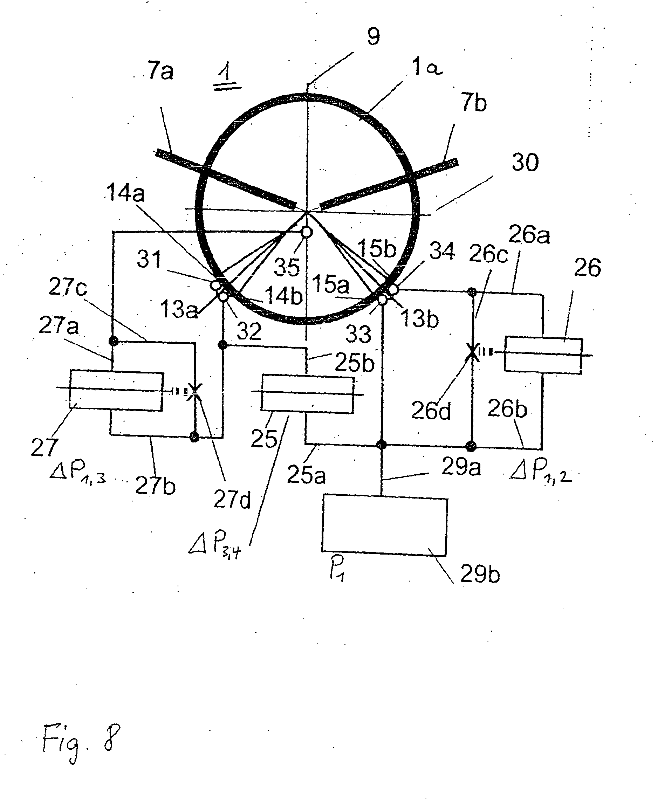

In der Figur 8 ist eine weitere Ausführungsform der erfindungsgemäßen Sonde 1 dargestellt, wobei zwei an einer Strömungsrippe 13a bzw. 13b angeordnete Bohrungspaare verwendet werden, z.B. die Bohrungen 31 und 32 oder alternativ die Bohrungen 33 oder 34. In beiden Fällen ist die im zentralen Bereich angeordnete Bohrung 35 erforderlich.

Die Anordnung der Druck-Meßbohrungen 31, 32, 33, 34 neben den Flanken 14a, 14b, 15a, 15b ist fertigungstechnisch vorteilhaft. Derartig angeordnete DruckMeßbohrungen erfassen die von den Strömungsrippen 13a, 13b erzeugten vom Flugzustand abhängigen Störungen der Strömung.

Bei der in der Figur 8 dargestellten Ausführungsform wird zum einen ein erster Differenzdruck über den Differenzdruck-Aufnehmer 27 und ein zweiter Differenzdruck über den Differenzdruck-Aufnehmer 26 ermittelt. Zur Kontrolle der neutralen Stellung kann optional der Differenzdruck-Aufnehmer 25 angeordnet sein. Der Differenzdruck-Aufnehmer 27 ist über Druckleitungen zum einen mit der Druck-Meßbohrung 35 im zentralen Bereich der Sonde und zum anderen mit der Druck-Meßbohrung 32 der ersten Rippe 13a verbunden. Ein Bypass-Ventil 27d im entsprechenden Leitungen kann zur Sicherheit zum Abbau von in den Differenzdruck-Aufnehmern auftretenden Überdrücken vorgesehen sein. Weiterhin ist der Differenzdruck-Aufnehmer 26 über Druckleitungen zum einen mit der Druck-Meßbohrung 33 und zum anderen mit der Druck-Meßbohrung 34, die sich jeweils an der zweiten Rippe 13b befinden, verbunden. Ein Bypass-Ventil 26d im entsprechenden Leitungen kann zur Sicherheit zum Abbau von in den Differenzdruck-Aufnehmern auftretenden Überdrücken vorgesehen sein. Mittels des Absolutdruck-Aufnehmers 29b, der über Druckleitungen mit den Meßbohrungen 32 an der ersten Rippe 13a und der Meßbohrung 33 an der zweiten Rippe 13b verbunden ist. Die Berechnung von Luftdaten aus den mittels der Druckaufnehmer erfaßten Drücken erfolgt nach den voranstehend beschriebenen erfindungsgemäßen Verfahren.

Bei Varianten der Ausführungsform nach der Figur 8 sind immer zumindest zwei Differenzdrücke zu bilden, wobei die Wahl der Orte für die Meßbohrung zu Abnahme der jeweiligen Drücke nach den Anforderungen des jeweiligen Anwendungsfalles erfolgen kann.

Vorteilhaft an der Ausführungsform mit Druckmeß-Bohrungen im Bereich der Rippen ist, daß an diesen Sellen Strömungsänderungen zu größeren Druckänderungen führen können, als an anderen Stellen der Sonde, so daß sich bei einer entsprechenden Anwendung eine größere Auflösung und damit größere Genauigkeit ergeben kann.

Die erfindungsgemäß ermittelten Differenzdrücke können auch anstelle der Differenzdruck-Aufnehmer mittels entsprechend zusammengeschalteter Absolutdruck-Aufnehmer erfolgen, wobei dann über entsprechende Funktionen aus den ermittelten Absolutdrücken die erfindungsgemäß erforderlichen Differenzdrücke zu ermitteln sind.

Um die Ausfallsicherheit des erfindungsgemäßen Luftdatensystems zu erhöhen, können auch mehrere derartige Meßsysteme vorgesehen werden. Durch eine Vermehrfachung von Meßsystemen kann ein Ausfall oder eine Degradation eines Meßsytems nach dem Stand der Technik erkannt und kompensiert werden.

**Patentansprüche**

1.  Luftdaten-Messvorrichtung für Fluggeräte zur Messung von Flugzuständen, mit einer Sonde (1), die an einem Strukturteil (3) des Fluggeräts angeordnet ist, zumindest an der Übergangsstelle zu dem Strukturteil (3) rotationssymmetrisch gebildet ist und die durch ein Lager um ihre Längsachse (2) drehbar an dem Strukturteil (3) gelagert und massenmäßig um ihre Längsachse (2) ausgeglichen ist, wobei der Drehwinkel ($\varphi_S$) der Sonde (1) über einen Messaufnehmer messbar ist,
    **dadurch gekennzeichnet,**

    - **dass** auf dem Sonden-Träger (1 a) zumindest zwei Strakes (7a, 7b) symmetrisch zu einer Sonden-Symmetrieebene (9) angeordnet sind, so dass der Sondenschiebewinkel ($\beta_S$) bei jedem Anströmzustand minimiert wird,
    - **dass** zur Erfassung von Differenzdrücken und eines Absolutdrucks an der Sondenoberfläche (5) zumindest drei Druck-Messbohrungen (21, 22, 23, 24; 31, 32, 33, 34, 35) mit diesen zugeordneten Differenzdruck-Aufnehmern (26, 27, 28, 29b) vorgesehen sind, wobei von den Druck-Messbohrungen (21, 22, 23, 24; 31, 32, 33, 34, 35) die erste im Zentrum (2) oder in einem radialen Abstand zu dem Zentrum (2) der Sonde (1) liegt, der kleiner ist als der radiale Abstand zum Zentrum (2), den die zweite Druck-Messbohrung (22; 32) hat, und der radiale Abstand der dritten Bohrung (23, 24; 33, 34) zum Zentrum (2) gleich oder größer ist als der der radiale Abstand der zweiten Druck-Messbohrung (22; 32) zum Zentrum (2), während eine der Druck-Messbohrungen (21; 35) in der Sonden-Symmetrieebene (9) liegt und die beiden anderen Druck-Messbohrungen (22, 23; 33, 34) in Bezug auf die Symmetrieebene (9) zueinander unsymmetrisch sind.

2.  Luftdaten-Messvorrichtung nach Anspruch 1, **dadurch gekennzeichnet, dass** zwei Druck-Messbohrungen (21, 22) auf der Sonden-Symmetrieebene (9) angeordnet sind und die dritte Druck-Messbohrung (23; 24) beabstandet dazu angeordnet ist.

3.  Luftdaten-Messvorrichtung nach Anspruch 1, **dadurch gekennzeichnet, dass** zumindest eine vierte Druck-Messbohrung (24) bezüglich einer (23) der drei weiteren Druck-Messbohrungen symmetrisch zur Symmetrieebene (9) liegt, und dass die Druckdifferenz zwischen den symmetrischen Druck-Messbohrungen (23, 24) zur Fehlererkennung verwendet wird.

4.  Luftdaten-Messvorrichtung nach einem der voranstehenden Ansprüche, **dadurch gekennzeichnet, dass** die Druckdifferenzsensoren (26, 27) durch Bypass-Leitungen (26c, 27c) und Druckventile (26d, 27d), wenn nötig vor zu großen Druckdifferenzen bei großen Geschwindigkeiten vor Beschädigung geschützt werden.

**Claims**

1.  Air-data measurement apparatus for airborne vehicles for measurement of flight states, having a probe (1) which is arranged on a structure part (3) of the airborne vehicle, is designed to be rotationally symmetrical at least at the junction point with the structure part (3) and is borne by a bearing on the structure part (3) such that it can rotate about its longitudinal axis (2) and whose mass is balanced around its longitudinal axis (2), wherein the rotation angle ($\varphi_s$) of the probe (1) can be measured by a measurement sensor,
    **characterized**

    - **in that** at least two strakes (7a, 7b) are arranged on the probe support (1a) symmetrically with respect to a probe plane of symmetry (9), so as to minimize the probe shift angle ($\beta_S$) in every incident-flow state,
    - **in that** at least three pressure measurement holes (21, 22, 23, 24; 31, 32, 33, 34, 35) having differential-pressure sensors (26, 27, 28, 29b) associated with them are provided in order to detect differential pressures and an absolute pressure on the probe surface (5), wherein the first of the pressure measurement holes (21, 22, 23, 24; 31, 32, 33, 34, 35) is located at the centre (2) or at a radial distance from the centre (2) of the probe (1), which distance is less than the radial distance to the centre (2) which the second pressure measurement hole (22; 32) has, and the radial distance of the third hole (23, 24; 33, 34) from the centre (2) is equal to or greater than the radial distance of the second pressure measurement hole (22; 32) from the centre (2), while one of the pressure measurement holes (21; 35) is located on the probe plane of symmetry (9), and the two other pressure measurement holes (22, 23; 33, 34) are asymmetric with respect to one another, with respect to the plane of symmetry (9).

2.  Air-data measurement apparatus according to Claim 1, **characterized in that** two pressure measurement holes (21, 22) are arranged on the probe plane of symmetry (9), and the third pressure measurement hole (23; 24) is arranged at a distance from it.

3. Air-data measurement apparatus according to Claim 1, **characterized in that** at least one fourth pressure measurement hole (24) is located symmetrically with respect to the plane of symmetry (9) with respect to one (23) of the three further pressure measurement holes, and **in that** the pressure difference between the symmetrical pressure measurement holes (23, 24) is used for fault identification.

4. Air-data measurement apparatus according to one of the preceding claims, **characterized in that** the pressure-difference sensors (26, 27) are protected, when necessary, against damage by excessively large pressure differences at high speeds, by means of bypass lines (26c, 27c) and pressure valves (26d, 27d).

**Revendications**

1. Dispositif de mesure de données aérodynamiques pour des aéronefs pour la mesure de conditions de vol, avec une sonde (1) disposée sur un élément de structure (3) de l'aéronef, qui est formée avec une symétrie de révolution au moins sur la zone de transition vers l'élément de structure (3) et qui est montée de manière à pivoter autour de son axe longitudinal (2) sur l'élément de structure (3) au moyen d'un palier et ses masses étant équilibrées autour de son axe longitudinal (2), l'angle de rotation ($\varphi_S$) de la sonde (1) pouvant être mesuré par l'intermédiaire d'un capteur de mesure, **caractérisé en ce que**

   - deux strakes (7a, 7b) au moins sont disposés sur le support (la) de la sonde, symétriquement par rapport à un plan de symétrie (9) de la sonde, de manière à minimiser l'angle de glissement ($\beta_s$) de la sonde à chaque état d'affluence de l'air,
   - pour l'enregistrement de pressions différentielles et d'une pression absolue à la surface de la sonde (5), au moins trois perçages de mesure de la pression (21, 22, 23, 24 ; 31, 32, 33, 34, 35) équipés de ces capteurs de pression différentielle (26, 27, 28, 29b) correspondants sont prévus, le premier parmi les perçages de mesure de la pression (21, 22, 23, 24 ; 31, 32, 33, 34, 35) se trouvant au centre (2) ou à une distance radiale du centre (2) de la sonde (1) inférieure à la distance radiale au centre (2) du deuxième perçage de mesure de la pression (22 ; 32), et la distance radiale du troisième perçage (23, 24 ; 33, 34) par rapport au centre (2) étant supérieure ou égale à la distance radiale du deuxième perçage de mesure de la pression (22 ; 32) par rapport au centre (2), alors qu'un des perçages de mesure de la pression (21 ; 35) se trouve dans le plan de symétrie (9) de la sonde et les deux autres perçages de mesure de la pression (22, 23 ; 33, 34) sont mutuellement asymétriques par rapport au plan de symétrie (9).

2. Dispositif de mesure de données aérodynamiques selon la revendication 1, **caractérisé en ce que** deux perçages de mesure de la pression (21, 22) sont disposés sur le plan de symétrie (9) de la sonde et le troisième perçage de mesure de la pression (23 ; 24) est disposé à une certaine distance de ceux-ci.

3. Dispositif de mesure de données aérodynamiques selon la revendication 1, **caractérisé en ce qu'**au moins un quatrième perçage de mesure de la pression (24) est situé symétriquement à un (23) des trois autres perçages de mesure de la pression par rapport au plan de symétrie (9) et que la différence de pression entre les perçages symétriques de mesure de la pression (23, 24) est utilisée pour la détection d'erreurs.

4. Dispositif de mesure de données aérodynamiques selon l'une des revendications précédentes, **caractérisé en ce que** les capteurs de différence de pression (26, 27) sont protégés en cas de besoin contre les détériorations par des différences de pression trop importantes aux grandes vitesses, au moyen de conduits de by-pass (26c, 27c) et de soupapes de sécurité (26d, 27d).

Fig. 1

Fig. 2

Fig. 3

Fig. 4

Fig. 5

Fig.6

Fig. 7

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4184149 A
- US 3079758 A